Europäisches Patentamt

European Patent Office

Office européen des brevets

(11) Publication number: **0 007 136**
**A1**

# (12) EUROPEAN PATENT APPLICATION

(21) Application number: **79200366.7**

(22) Date of filing: **05.07.79**

(51) Int. Cl.³: **A 23 K 1/12**
**A 23 K 1/22**

(30) Priority: **07.07.78 CH 7402/78**

(43) Date of publication of application:
**23.01.80 Bulletin 80/2**

(84) Designated Contracting States:
**AT BE CH DE FR GB IT LU NL SE**

(71) Applicant: **BATTELLE MEMORIAL INSTITUTE**
**7 route de Drize**
**CH-1227 Carouge/Genève(CH)**

(72) Inventor: **Regnault, Alain**
**Villard-Tacon par Ornex**
**F-01210 Ferney-Voltaire(FR)**

(72) Inventor: **Sachetto, Jean-Pierre**
**L'escalade Rue de Savoie 3**
**F-74160 St Julien en Genevois(FR)**

(72) Inventor: **Armanet, Jean-Michel**
**8, rue des Bossons**
**CH-1213 Onex(CH)**

(72) Inventor: **Tournier, Hervé**
**"Le Riondet"**
**F-74520 Valleiry(FR)**

(74) Representative: **Dousse, Blasco et al,**
**7, route de Drize**
**CH-1227 Carouge/Genève(CH)**

(54) Cattle fodder from partially hydrolyzed ligno-cellulosic materials and urea and process of manufacture.

(57) A fodder for ruminant containing prehydrolyzed ligno-cellulosic materials and urea. Most of this urea is under nitrogen slow-release form. The fodder is prepared by hydrolysing, straw, bagasse or other ligno-cellulosic by-products with diluted acid and, subsequently, condensing said prehydrolyzed material with urea.

EP 0 007 136 A1

CATTLE FODDER FROM PARTIALLY HYDROLYZED LIGNO-CELLULOSIC
MATERIALS AND UREA AND PROCESS OF MANUFACTURE

The present invention concerns a ruminant fodder made from fibrous ligno-cellulosic substances such as straw, oat-chaff, corn stumps, husk, bagasse of sugar canes, etc..., this material having been subjected to partial acid hydrolysis, and urea. The invention also concerns a process for manufacturing this fodder.

It is known that, besides a certain proportion of mineral salts and extractable substances, the above ligno-cellulosic materials consist of a polymeric backbone the chemical structure of which consists of approximately 1/3 of cellulose, 1/3 of hemi-cellulose and 1/3 of lignin. Consequently, such materials normally provide very unsatisfactory fodders for ruminants because they are only poorly attacked, during digestion, by the saccharolytic micro-organisms present in the rumen of these animals. These drawbacks have been cured partially by subjecting the ligno-cellulosic materials to controlled hydrolysis with the result that a fraction thereof is converted to reducing sugars (directly assimilable, in principle) and that the insoluble fraction is rendered more accessible to digestion by the enzymes. Thus, USP No 3.939.286 teaches a method for treating comminuted vegetal materials, such as wooden chips, various cereal straw, bagasse, etc... so as to improve their digestibility by ruminants. This method comprises treating a mixture of such materials and water with an acid at pH below 3 in the presence of a salt of iron or of manganese, then oxidizing the mass under heat and pressure, then hydrolyzing under the same conditions such as to convert at least one portion of the treated substances into saccharides and saccharic acids.

According to another process (French Patent No 2.264.489) the ligno-cellulosic material is treated under pressure up to 160°C with relatively concentrated solutions of acids such as $H_3PO_4$, HCl, and $H_2SO_4$ so as to hydrolyze a significant portion of the cellulose moiety of the crude material and produce reducing sugars.

It is known, on the other hand, that cellulosic products cannot, by themselves, entirely fulfill the feeding requirements of cattle because the latter need, as do other living beings, nitrogen containing materials for building up their organic texture. Therefore, in addition to polysaccharide fodders, cattle is fed with a significant proportion of protein materials such as oil-seed cakes, cereals, edible meals, etc... of which a large fraction could be used for human consumption. This concept is therefore in contradiction with the objective of improving the cereal supply intended for poor and undevelopped countries. Hence, it has been sought to replace the plant protein normally given to cattle by simple nitrogen compounds, not edible by man, such as ammonium salts, urea and condensation products between ammonia and carbohydrates. Conventionally, urea is simply mixed with the cattle fodder but this method has a serious drawback. Thus, in the stomach of ruminants urea is rapidly decomposed by urease with liberation of ammonia. This ammonia is normally used by the micro-organisms present in the digestive tract for synthesizing the amino-acids which are the precursors of further living matter. However, in the case of free urea rich fodders, an instant excess of ammonia development may happen with consequent toxicity hazard for the animals and significant loss of nitrogen by excretion.

This sort of drawback has been cured by providing the urea in the fodder in the form of "slow-release urea", that is in the form of urea derivatives the attack of which by intestinal micro-organisms is much slower than of free urea and which, as a consequence, liberate ammonia slower and during an extended period.

Such derivatives are represented by urea-aldose compounds, namely glycosylureas obtained by condensing reducing sugars with urea. There exists an abundant literature on the subject of which some important references are quoted in some earlier applications of the present Applicants, namely No 7159/77 and 1585/78 as well as in USP No 4.066.750. Thus, such glycosylureas can be produced from glucose, lactose, xylose, molasses, hydrolyzed wood products, etc..., and it has been shown that by using them in fodders in the place of free urea marked nutritional improvement was experienced, which was noted because of the weight increase of the ruminants thus fed. Furthermore, as the Applicants have shown previously, the use of purified glucosylurea in cellulose-based fodders causes an improved digestibility of the cellulose fraction thereof.

The Applicants have now discovered that it is possible to combine the advantages arising from the use, for feeding cattle, of a partially hydrolyzed ligno-cellulosic fodder and urea in the form of a slow-release compound. Thus, the Applicants have provided an entirely new type of fodder.

This fodder, based on acid partly hydrolyzed ligno-cellulosic materials of which the hydrolysis extent corresponds to the formation, by kg of the starting material, of at least one gram-mole of aldoses, in the form of reducing mono- and oligo-saccharides, and which contains, by kg of the starting material, at least two moles of urea of which a quantity is bound, in the form of ureido-aldoses to such reducing saccharides, in the proportion of one molecule of urea per aldehyde function of said saccharides, is characterized by the fact that at least one portion of the remaining urea not bound to the reducing sugars from hydrolysis is present under a form that is still not instantaneously degradable by urease and that has a nitrogen slow-release capacity when used as feedstuff for ruminants.

In general, the degree of hydrolysis of this fodder, calculated on the basis of the amount of mono- and oligo-saccharides formed from 1 kg of dry starting ligno-cellulosic material, corresponds to about 1 to 2 moles of reducing sugars and the fodder of the invention comprises, still per kg of said starting material, from about 2 to 5 moles of urea of which 1 to 2 moles are bound to said reducing sugars as ureido-aldoses, 1 to 2 moles are linked to the insoluble portion of the ligno-cellulosic material and are not instantly degradable by urease and the remainder of which, in case there is such a remainder, is under the form of free urea or as the salt thereof with the acid having been used for hydrolysis. It should be mentioned at this stage, that the existence of acid prehydrolysed ligno-cellulosic based forages containing urea, part of which is retained under the form of nitrogen slow-release ureido-aldoses when used for feeding ruminants, is not new per se. Indeed, methods for manufacturing such forages are disclosed in US Patents No 3.878.304 (MOORE) and 4.089.980 (BERGER et al). However, in such prior-art documents, there is explained that the nitrogen slow-release urea is definitely bound to the sugars resulting from the hydrolysis and it is indicated nowhere in said patents that a portion of the remaining urea, that is the urea not bonded to said sugars, may still be linked to the fiber and be capable of slowly releasing its nitrogen content when used as a cattle feedstuff. Moreover, an examination of the various practical examples given in said references indicates that the proportion of bound urea, in the cases of the prior-art fodders, is, in general, much below that of the fodders of the present invention.

It must be noted that, depending on the quantity of urea added after hydrolysis and subjected to condensation, the feedstuff can be more or less rich in nitrogen. It is generally accepted that the level of "protein equivalent" of a feedstuff is equal to the nitrogen level times 6.25. Thus, with the present fodder which contains, per kg of dry starting material, about 2 to about 5 moles of urea, that is a proportion by weight of 120/1120 to 300/1300 (0.107-0.23) or 5 to 11 % of nitrogen, the "protein equivalent" is about 30 to 60 %, which can be favorably compared with cereals (barley for instance) which only contain about 13 % protein equivalent. In practice, for feeding ruminants, there will be used mixtures of fodders, such mixture being more or less rich in the fodder of the invention depending on the nitrogen equivalent of the latter and on the nitrogen content of the other constituents of said mixture. As an example, a typical feedstuff can contain 20-40 % of the forage of the invention, 40-60 % of cereals, the remainder comprising additives, fats, etc...

The preferred forms of the fodder of the invention contain, per kg of dry starting material, about 1.5 mole of urea under the glycosylurea form, about 1.5 mole of urea bound to the fiber and a variable quantity of free urea depending on the total amount used for the condensation. This last amount can be reduced if desired by using less urea in the condensation step or otherwise the hydrolyzing step can be extended to values exceeding 30% in which case the glycosylurea bound urea will be increased at the expense of the free urea.

The fodder of the invention has a color ranging from tan to deep brown depending on the manufacturing conditions (temperature and extent of hydrolysis; temperature of the condensation reaction, etc ...). It consists of a mass of agglomerated fibers, the general physical aspect of which is not much different from the original chopped material except for increased frangibility and reduced resilience. Its palatability for animals is good, especially when manufactured by using HCl and final neutralization of the residual acid by NaOH which forms a significant amount of salt much appreciated by ruminants.

The process of manufacture of the present fodder is characterized by the fact that

a) one contacts the ligno-cellulosic material with a diluted acid and one heats the components so as to hydrolyze into reducing saccharides at least the hemi-cellulosic portion of said material and

b) one puts this material thus prehydrolyzed and retaining, besides the saccharides thus produced, at least one portion of the acids used for hydrolysis in contact with a urea solution, one heats the whole mixture so as to cause a fixation of this urea, because of the catalytic action of the acid present, partly on the insoluble fibers of the prehydrolyzed material and partly on the reducing sugars formed by hydrolysis by condensation and formation of glycosylureas.

Thus, the process of the present invention contrasts strongly with the methods of the prior-art, namely those disclosed in USP 3,878,304 and 4,089,980, in which the ligno-cellulosic starting material is heated in contact with a mixture of urea and acid.

Thus the drawbacks of such prior-art methods which require large amounts of acids to overcome the basicity of the urea and in which part of this urea is destroyed because of the presence of a large quantity of acid are overcome.

According to a first embodiment of the process of the invention, one proceeds as follows :

a1) One heats the ligno-cellulosic material with a diluted acid solution rich in reducing sugars formed by the hydrolysis of said material, so as to hydrolyze the major part of the hemi-cellulosic fraction thereof,

a2) one drains the material but without drying it completely, in order that it retains, impregnated within its fibers, part of the hydrolysis solution,

b) one contacts the material thus still wet with a concentrated aqueous urea solution and one heats the mixture while distilling off the water which, under the catalytic influence of the acid present, causes the condensation of the reducing saccharides with a portion of the urea present and the fixing of another portion thereof on the insoluble fibers of said material.

It has not been explained by which phenomenon a significant part of the urea present becomes linked to the insoluble fibers of the ligno-cellulosic material in a form not easily degradable by urease but independently of its condensation with the soluble reducing saccharides. Attempts have been made to know whether this surprising property was preserved after leaching out the soluble reducing sugars by washing the freshly hydrolysed material with water, but it was noted that it was not... Indeed, after such leaching and subsequent drying of the hydrolyzed material, the urea retention was only about 10 %, i.e. about 100 g (nearly 1,6 mole) per kg of dry material, which corresponds substantially to the retention capacity of the same, non-hydrolyzed, material e.g. straw or bagasse. In contradistinction, in the fodder of the invention, wherein there has been formed, after hydrolysis, about 1,6-1,8 mole of reducing sugars (xylose, hexoses and oligosaccharides) per kg of dry material and which has been further treated with 5 mole (300 g) of urea, there remains, bonded to said sugars, 1,6-1,8 mole (95-110 g) of urea and, linked to the insoluble fibers, 2,5-3 mole of urea (150-180 g), the rest being present in the form of unbound urea or in the form of a salt of urea with the residual acid from the catalyzed condensation. It is however known that the hydrolysis of polysaccharides is a reversible reaction, some of the oligome- ric aldoses being repolymerizable upon neutralization of the medium. It is therefore possible that such aldoses, in insoluble form, be present in the fibrous portion of the freshly hydrolyzed material and that, under these conditions, the reactive carbonyl function thereof is capable to condense with urea. Such a reactivity could possibly disappear by repolymerization after leaching out the water-soluble hydrolyzed portion which would explain the loss of the fixing property relative to urea, by the washing of the hydrolyzed material.

When the present process is applied to the manufacture of the present fodder on the industrial scale, it is advantageous to perform the preliminary hydrolysis in a solution the concentration in sugars of which is adapted for having, impregnated in the solid hydrolyzed material after draining, a quantity of said sugars substantially equal to that which has just become available during said hydrolysis operation. For achieving this, one operates in a semi-continuous manner by using, for treating successively a series of identical charges, the same hydrolyzing solution which is replenished, after each operation, with a quantity of acid and water equal to that removed by the previous load.

As an illustration, there is given in annex a schematic representation of a device for embodying the process of the invention.

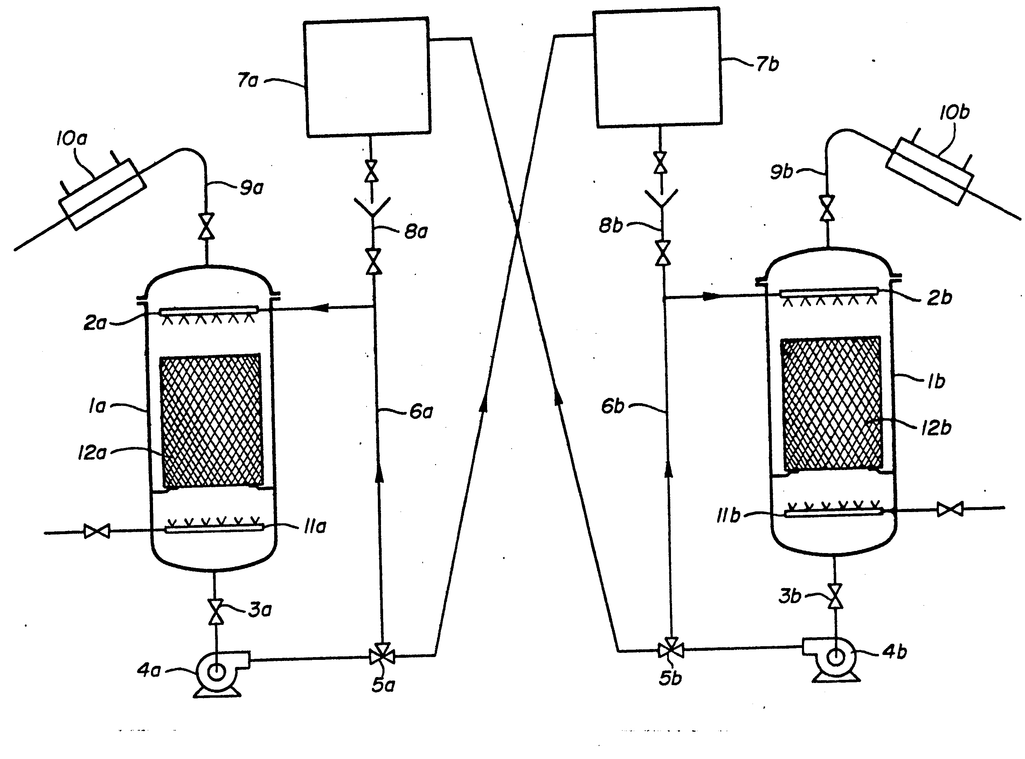

The only figure represents an installation for treating ligno- cellulosic materials by, successively, hydrolysis and condensation with urea.

This installation comprises, identically equipped and symmetrically connected together, two reactors 1a and 1b provided with sprayers 2a and 2b for the introduction of liquids and outlet vanes 3a and 3b. These vanes 3 are connected to pumps 4a and 4b feeding the 3 way valves 5a and 5b which enable, either to recycle a liquid contained in the reactor through pipes 6a and 6b, or to pump it into the twin reactor via the storage tanks 7a and 7b, respectively. The reactors further comprise inlets 8a and 8b for introducing liquid charges and steam outputs 9a and 9b, the steam being condensable in the condensers 10a and 10b. The reactors still comprise hot air input ducts 11a and 11b, the material to be treated being enclosed in the baskets 12a and 12b, the latter being made of stainless steel or heat resistant synthetic resins for instance.

The present device operates as follows : under running conditions, the reactors operate simultaneously: in the first one the hydrolysis is carried out, in the other the condensation with urea is carried out, and alternatively. It will be understood, for the purpose of illustration, that the process is started with a hydrolysis step effected in reactor 1a. For this, basket 12a loaded with ligno-cellulosic material, e.g. comminuted straw, is introduced into said reactor which contains a 1-3 % solution of HCl (0,28-0,8N), or $H_2SO_4$ or $H_3PO_4$ and about 300 g/l of xylose. Admittedly, in this case the solid to liquid weight ratio is roughly 1:10. The mixture is boiled for 2-3 hrs, the 9/10th of the hydrolyzing liquid is drained by means of the pump 3a and this liquid is introduced into reactor 1a through tank 7b and input 8b.

The prehydrolyzed straw load in basket 12a therefore contains, dissolved in the impregnating liquid, a quantity of reducing sugars approximately equal to that produced in the course of the hydrolysis operation as well as a portion of the acid put into reaction. There is introduced, then, via input 8a and sprayer 2a, a concentrated urea solution containing about 2 to 3 equivalents of that compound as calculated from the quantity of sugars estimated to be present in said prehydrolyzed straw. The mixture is heated to 90-100°C while continuously recycling the liquid and distilling through outlet 9a and condenser 10a. After 2-3 hrs, the reactor inside pressure is reduced and the drying is completed by the introduction of heated air through ducts 11a. Then basket 12a is withdrawn from the reactor and the completed fodder is sent to storage.

While the reaction with urea is carried out in reactor 1a, hydrolysis of an identical load of straw enclosed in basket 12b is performed in reactor 1b under conditions similar to that set forth hereinabove. Once this operation has been completed, the whole process is repeated integrally, the additions from the outside being limited to the replenishment, after each cycle, of the hydrolysis aqueous solution with water and acid, and to the introduction into the reactors at the proper times of new portions of straw and urea. The device is therefore simple and economical to operate and only requires to have available the starting materials, water and cheap acid complements. In addition it can be transported on a vehicule and can be displaced thus enabling to produce a valuable fodder directly at places where vegetal refuses are available. Such movable installation is therefore particularly useful in deprived areas lacking forages and in which vegetal refuses sometimes available in large quantities are normally discarded or burned.

According to a modification of the present process, the hydrolysis is performed by injecting in the mass of ligno-cellulosic material a quantity of steam loaded with acid, such quantity being calculated so that the amount of liquid formed is small or nearly non existent and that the soluble reducing sugars thus formed remain adsorbed on the insoluble fibers of the prehydrolyzed material. Then, the urea condensation phase is carried out like in the process described hereinabove. This modification permits avoiding the transfer of liquids from one point to another point and decreases the weight of the displaceable reagents.

This injection of steam loaded with acid can be performed very simply and involves only little modification to the device represented on the drawing. It is sufficient to install on the reactor inside walls and in close relationship with the mass to be treated some banks of injection nozzles supplied with a classical steam source. The distribution piping for that steam is provided with an aspiration system (for instance a Venturi tube) which is connected to an acid tank. Thus, the steam flow provides a suction effect which, by means of the Venturi tube, produces an acid mist that blends with the steam, both components thus penetrating simultaneously into the mass to be hydrolyzed.

It should be also realized that it is also possible to work as follows to achieve the prehydrolysis of the ligno-cellulosic material : one starts with a diluted acid impregnation of said material, for instance by soaking the latter in the solution, said acid solution being actually more concentrated (3-6 %) than the acid solution described hereintofore, then when this soaked material is placed in the reactor, one injects steam heated to 100-130°C therein in order to achieve a very homogeneous heating effect without requiring to stir or agitate the material. Naturally, during this operation, part of the steam condenses in the material thus lowering the acid level thereof in order to reach, at the end of hydrolysis, the levels indicated previously (1-3 %). In this process modification, it is advantageous that the amount of liquid which eventually separates from the ligno-cellulosic material be as low as possible in order to minimize the reducing sugar losses: however, after the end of the hydrolysis when carried out under such conditions, the required quantity of urea can simply be dissolved into said condensate and this resulting solution can be again put into contact with the solid material for condensation. Most of the liquid being thereafter eliminated by evaporation or distillation, the products previously dissolved are again bound to the fiber at the end of this operation. In the case of such modification, the evaporation or distillation temperatures (for instance with hot air) can be of the order of 70-90° but this is only indicative. Also, in such case, it is economically advantageous to work in a single reactor.

The steam used in this modification can be provided by nozzles connected to a source of steam outside the reactor and injecting steam within the mass to be hydrolyzed with a degree of pressure that can be controlled at will depending on the steam introduction rate and the desired temperature. Alternately, the steam can be generated within the reactor itself by providing a layer of water at the bottom thereof underneath the material to be treated. The reactor is then heated by outside means, e.g. by means of a heating coil, until the water in the reactor starts to boil and thus furnishes steam to the material to be hydrolyzed.

Another factor which is important is the acid effective concentration during the phase of condensation between urea and the fiber impregnated with the sugars resulting from the prehydrolysis and the acid used to promote such hydrolysis. It is evident that, when carrying out the process of the invention by using steam as the heating means for hydrolysis and, afterwards hot air for effecting the condensation between urea and the sugar loaded fiber, the moisture will be progressively eliminated and there will be a time when the acid dissolved in the residual water impregnated in the fibers may become overconcentrated for properly acting as a condensation catalyst and may promote some kind of degradation of the glycosyl-urea already formed. This undesirable side reaction may lead to the formation of undigestible nitrogen compounds and may decrease the value of the product as a feedstuff. It has therefore been found that partial neutralization of the acid may be advantageous to avoid such drawbacks, particularly when using a non volatile acid to effect the hydrolysis and the condensation ($H_2SO_4$ or $H_3PO_4$); when HCl is used this kind of drawback is minimized because HCl progressively escapes out of the product when the condensation is effected under distilling conditions. When partial neutralization is contemplated, this is effected by adding the calculated amount of base at the end of the hydrolysis stage or together with the urea before condensation or by spraying the mass after the addition of the urea (for instance when the mass is conditioned before the final condensation heating step).

Another point which is worth mentionning is the desirability of avoiding overheating during the condensation stage, particularly if the concentration of acid is on the high side toward the end of the reaction, because of the extent of evaporation of the water (e.g. when the concentration of the acid impregnated in the fiber exceeds, say 10-20%). Thus, it is advantageous to carry out the condensation operation by first evaporating under reduced pressure and at relatively low temperature the excess of water (e.g. 40-50°C) in order to reach an optimum concentration of acid (e.g. about 3-10% of acid in the solution impregnated in the fibers), then shut the evacuating valve to momentarily stop the evaporation of the water and heat to optimal condensation temperature, e.g. 70-80° (until the condensation is complete, then again reduce the temperature down to about 40-50° (and reestablish the vacuum until the required degree of dryness is achieved.

The examples that follow illustrate the invention.

Example 1

Preparation of a cattle fodder

In a 20 l pyrex or stainless-steel reactor provided with a stirrer and a reflux condenser, there was introduced 1.1 kg of chopped fodder containing 10 % moisture (1 kg of dry matter). Such a fodder can consist, for instance, of chaff and cereal straw, rice hulls, corn cobs, sugar cane bagasse, cellulose residues, etc...

Its approximate composition is : hemi-cellulose 20-30 %: cellulose 30-50 %; the rest, i.e. lignin, mineral salts and extractable substance. Then, there was added about 10 l of a diluted acid solution containing about 300 g/l of xylose plus the other reducing sugars originating from the hydrolysis of another load of the same ligno-cellulosic material as treated in the present example. As the acid, the following can preferably be selected : HCl 1 % (total HCl = 100 g), $H_2SO_4$ or $H_3PO_4$ 2.5 %.

The mixture was agitated and boiled for 2-3 hours, which effected the hydrolysis of the hemi-cellulosic fraction of the material and liberated about 80 % of soluble reducing sugars and about 20 % of reducing disaccharides and oligosaccharides partially soluble, the solubility depending on the degree of hydrolysis. In a specific case where bagasse was used, there was formed about 220 g of xylose (1.46 mole) and 22 g of hexoses (0.122 mole) i.e. a total of 1,582 mole of soluble sugars.

The material was drained and 9 l of the solution were removed, after which there was introduced, in the place, a solution of 270 g (4.5 mole) of urea in about 600 ml $H_2O$ at 50°C. The mixture was slowly agitated and heated 5 hours to 90°C. After about 1 hour heating time, the pressure was progressively decreased and the water slowly distilled off the reactor (initial water content plus the water that formed during condensation between the aldehyde groups and urea). Finally, heating was continued for 2-3 hours at 60°C / 14 Torr until complete drying: there was thus obtained 1235 g of a brown colored product.

A sample of said product was subjected to the digestion test with urease in aqueous solution and, from the results, it was concluded that the overall product contained only 89.5 g of free urea (1.5 mole) attackable by urease. Thus, besides the 1.58 mole of urea which had condensed with the soluble reducing sugars, there remained 4.5 -1.5 -1.582 = nearly 1.4 mole of urea which was bound to the insoluble back-bone of the product and consisted of a significant amount of nitrogen slow-release urea.

The obtained crude product was analyzed for its total nitrogen content and the result (9.9 %) indicated that it contained the near totality of the 4.5 mole of urea added at the start. Of this urea, 3 mole (67 %) are under the form of slow-release urea (glycosylureas plus the urea bound to the fiber), from which the protein value of the fodder can be estimated as follows :
9.9 x 0.67 x 6.25 = 41.5 % protein equivalents (slow-release nitrogen compounds).

The obtained fodder, called (A) hereinunder, was evaluated in the diet of sheep for a period of three weeks. As control fodders (B) and (C) were prepared as follows :

B) One kg of chopped straw was subjected to the prehydrolysis treatment described above after which the soluble sugars formed were washed away with water until they were eliminated completely. Then the humid mass was treated by 3 mole of urea in the same conditions described above. After distillation of the water, drying and analysis with urease, it was found that a small portion of the urea (30 g, 0.5 mole, about 10% of the originally used urea) remained linked to the fiber in a form resistant to urease. There was then added to the fodder 1.6 mole of a 90 : 1 mixture of xylosylurea and glucosylurea, such mixture corresponding to the sugars, lost by the washing, which had thereafter been condensed separately with urea according to standard means.

C) One kg of the same chopped straw was subjected to hydrolysis as described above; then it was drained until it retained about 1/10 of the hydrolyzing solution (i.e. a portion of that solution containing $\sim$ 270 - 300 g of reducing sugars) and it was mixed with 4.5 mole (270 g) of urea. The mixture was then dried under reduced pressure.

Consequently, there were available three kinds of fodders (A), (B) and (C), the significant characteristics of which are summarized in the table below:

| Fodder | Approxim. extent of hydrolysis | Reducing sugars (mole) | Slow-release Ureido-aldoses (mole) | Urea Urea bound to fiber (mole) | Free Urea (mole) |
|---|---|---|---|---|---|
| A | 30% | - | 1.6 | 1.4 | 1.5 |
| B | 30% | - | 1.6 | 0.5 | 2.4 |
| C | 30% | 1.6 | - | - | 4.5 |

To the above three fodders (A), (B) and (C) were then added the usual feed complements in order to convert them to completed feed-stuffs, i.e. starches, vitamin and ingredient premixes, flavors, fats, etc ... according to the following: Fodder (A) or (B) or (C) 20%, ground cereal (barley) 60%, other additives 20%. Then, the sheep available (30 heads) were divided into three groups each of 10 and each group was fed with one of the above mentioned mixture (called (A), (B) and (C)) at the rate of 1.2 kg of feedstuff per animal and per day.

After three weeks the weight gains were measured and the following data were recorded: The animals nourished with the feedstuff containing fodder (B) had increased weight 22% better than the animals nourished with the feedstuff containing fodder (C). With feedstuff labelled (A), the increase was 67% over (C). These results show the very significant advantages brought up by the fodder of the invention in which the slow-release urea compounds are prepared within the forage itself (in-situ), as compared to prior-art fodders in which the urea is, either free (C), or under slow-release form in large fraction, but mixed afterwards with the prehydrolyzed ligno-cellulosic material.

Example 2

Hydrolysis whereby heating is performed by injecting steam

In a 13 l heat insulated cylindrical reactor adapted to withstand a pressure of 1.2 bar, there was introduced 1 kg of dry comminuted wheat straw which had been impregnated by soaking with two

kg of 3% aqueous $H_2SO_4$.

Through the bottom of the reactor, steam at 110-120°C was injected under a pressure of 0.6-1 bar. The unused steam was left to escape through an adjustable valve at the top of the reactor after getting across the vegetal mass. During this injection (2 hrs) the inside of the reactor was kept at a temperature of about 110-130°C under 0.6-1 bar of pressure.

After that period, there was recovered 1.25 1 of condensate at the bottom of the reactor and the total of the wet mass of vegetal matter was 3.730 g, of which 730 g corresponded to dry matter and the three kg to the impregnating liquid.

The analysis of the sugars in the condensate indicated the presence of 24.7 g of pentoses and 2.5 g of hexoses. The analysis of the sugars in the recovered wet vegetal mass indicated the presence therein of 164.5 g of pentoses and 19.8 g of hexoses.

The total of the reducing sugars produced during hydrolysis amounted thus to 189.2 g of pentoses and 22.3 g of hexoses, which corresponded to the liberation of 1.26 mole of pentose and 0.125 mole of hexoses (total 1.385 mole); the yield of hydrolysis was therefore 70% for pentoses and 5.6% for hexoses, respectively, relative to the theory. Further, 87% of the freed sugars were retained on the vegetal material whereas 13% had gone in the condensate.

After hydrolysis, 200 g of urea (3.3 mole) were dissolved in the 1.25 1 of condensate and the obtained solution was added to the prehydrolyzed vegetal material in the column reactor so as to uniformly impregnate this material with the urea solution. In order to achieve this, the excess of liquid was circulated by means of a pump which aspirated the liquid at the bottom of the reactor and reinjected it at the top.

Simultaneously, air heated to 70-80°C was introduced at the lower end of the column which:

- enabled the progressive elimination of the impregnating water from the vegetal material with consecutive concentration of the sugars and urea for improving the condensation reaction leading to the glycosylureas;

- brought the temperature inside of the reactor progressively up to 70-80°C, which is the proper temperature for having the condensation reaction sugar-urea to take place in a reasonable time (a few hours).

The introduction of warm air was continued until the residual moisture of the vegetal material has dropped down to 10-20%. A sample of this material was extracted with water and the solution was analyzed with urease which showed, after extrapolating to the full lot, that only 1/10 of the original urea is still free and degradable by urease whereas the 90% of said urea are linked to the fodder and not instantly degradable by urease (slow-release urea).

The fodder thus obtained can be used to feed cattle as in the previous Example. However, it is preferably neutralized with a diluted solution of NaOH and again dried with hot air in order to improve its palatability to the animals.

Example-3

Fixation-of-urea-on-prehydrolyzed-ligno-cellulosic material

Three 10 g portions of chopped wheat straw (dry weight), samples (D), (E) and (F) were selected and subjected to the following operations:

D) The straw was immersed into a solution of 100 ml of 0.5 N $H_2SO_4$, 20 ml $H_2O$ and 2.7 g urea (0.045 mole). The mixture was allowed to stand 24 hrs at room temperature after which the straw was drained and washed twice with 100 ml $H_2O$. Then, the straw was resoaked with 200 ml $H_2O$ and drained again. The draining and washing waters were collected (total 400 ml) and subjected to analysis which showed the presence of 2.43 g of urea; therefore, 0.27 g (0.005 mole) of urea were still bound to the straw ( 10% of the original amount).

E) The sample of straw was dipped into 100 ml of 0.5 N $H_2SO_4$ and the whole was heated 5 hrs at 95° C (reflux). After cooling, the straw was drained and carefully washed with 5 successive portions of 100 ml $H_2O$. The combined filtrate and washings were analyzed and shown to contain sugars the quantity of which amounted to 66% from theory of $C_5$ sugars and 6% of $C_6$ sugars (on the basis of the theoretical full degradation potentials of the hemicellulosic and cellulosic fractions of the straw used); total about 0.015 mole of sugars present.

The sample of prehydrolyzed and washed straw was mixed with a solution of 2.7 g of urea in 100 ml $H_2O$ and, under stirring, this mixture was evaporated to dryness under reduced pressure. Then the straw thus treated was heated and maintained at 80° C overnight. It was thereafter extracted with 250 ml $H_2O$ and the anylysis of the aqueous extract showed that about 0.27 g of the urea had remained stuck on the straw.

F) The sample of straw was dipped in 100 ml 0.5 N $H_2SO_4$ and heated 4 hrs under reflux (95° C). Analysis of a small aliquot of the liquid showed that the extent of $C_5$ and $C_6$ sugar formation was identical with that of case E) above. Then, a solution of 2.7 g of urea in 10 ml of water was added, the mixture was brought to 90° C and the pressure was reduced for eliminating the water by evaporation; then the dry residue was heated overnight to 80° C. The obtained product was extracted with several successive portions of water (total 250 ml) and the analysis of these combined extracts was carried out. It was found that the washing extracts contained 0.970 g of free urea measurable with urease. Therefore, 1.73 g of urea (0.029 mole) remained fixed on the fiber, either as glycosylureas or in an undetermined form but not instantly degradable by urease and therefore having a slow-release property. Since the total of the sugars was 0.015 mole, the portion of fiber bound urea was 0.029-0.015 = 0.015 mole, i.e. three times the quantity retained in cases D) and E) above. For the time being, the reasons for such unexpected and surprising increase in the quantity of the slow-release urea are unknown which impart to the fodder of the invention its particularly advantageous nutritional properties.

Example 4

Neutralization of the acid catalyst

Ten kg of dry chopped straw were subjected to the same treatment described in Example 2 with 20 l 3% $H_2SO_4$ in a 100 l cylindrical reactor provided with steam injectors at the bottom. The subsequent reactions (heating with hot air and drying) were carried out as further described in Example 2 after which, when the moisture content of the obtained product had dropped to about 10-20% the whole mass was spread on a flat surface and sprayed as a thin layer (2-3 cm) with 5 1 of water containing dissolved 490g of NaOH. Thereafter, the product was put into a rotating drum and homogenized for 1 hr under rotation. Optionally, a stream of warm air was passed through the drum to further reduce the moisture content of the neutralized fodder. The palatability of the neutralized product was excellent when fed to cows and when free choice with soja cakes was possible, equal amounts of both feedstuff were eaten by the animals.

Example-5

Pelletizing-of-the-fodder

Ten kg of straw were grossly chopped until the average stalk pieces were about 2-3 cm. Then the mass was prehydrolyzed with 20 1 $H_2SO_4$ 3% and steam in a 100 1 reactor as described in Example 2. The wet acidified prehydrolyzed mass was placed in a 100 1 horizontal drum mill and 2 kg of urea dissolved in 5 1 of liquid (condensate from the prehydrolysis plus some water) were added. The drum was rotated at room temperature for 6 hrs after which the moist mass had pelleted itself in roughly spherical or oblong pellets of about 1-2 cm size. The walls of the drum were clean and there was no unpelletized material left. For achieving this auto-pelletizing process, chopping level of the straw, as well as prehydrolysis state, moisture content and the presence of urea are important although the exact range of these parameters has not been determined.

Then the pellets were collected and heated with hot air at 70-80°C to effect the condensation with urea. Such operation can be carried out if desired in the same reactor used for the prehydrolysis step.

In this embodiment, it was sometimes found advantageous to partially neutralize the acid in the pellets before effecting the condensation with urea in order to minimize the effect of possible acid overconcentration during elimination of the excess of moisture. This neutralization was effected by adding the required amount of base to neutralize about 8/10 of the original amount of acid, i.e. 390 g of NaOH, dissolved in the urea containing solution.

# CLAIMS

1. Cattle fodder, based on acid partly hydrolyzed ligno-cellulosic materials of which the hydrolysis level corresponds to the formation, by kg of the starting material, of at least one gram-mole of aldoses, in the form of reducing mono- and oligo-saccharides, and which contains, by kg of the starting material, at least two moles of urea of which a quantity is bound, in the form of ureido-aldoses to such reducing saccharides, in the proportion of one molecule of urea per aldehyde function of said saccharides, characterized by the fact that at least one portion of the remaining urea not bound to the reducing sugars from hydrolysis is present under a form that is still not instantaneously degradable by urease and that has a nitrogen slow-release capacity when used as feedstuff for ruminants.

2. The fodder of claim 1, the degree of hydrolysis of which, calculated on the basis of the theoretical amount of mono- and oligo-saccharides formed from 1 kg of dry starting ligno-cellulosic material, corresponds to about 1 to 2 mole of reducing sugars, which comprises, still per kg of said starting material, from 2 to about 5 mole of urea of which 1 to 2 mole are bound to said reducing sugars as ureido-aldoses, 1 to 2 mole are linked to the insoluble portion of the ligno-cellulosic material and are not instantly degradable by urease and the residue of which, in case there is such a residual urea, is under the form of free urea or as the salt thereof with the acid having been used for hydrolysis.

3. A process for manufacturing the fodder of claim 1 which comprises:

a) contacting the ligno-cellulosic material with a diluted aqueous acid and heating for hydrolyzing at least the major part of the hemi-cellulosic portion thereof into reducing saccharides and

b) contacting said material, thus prehydrolyzed and which retains, besides the formed saccharides, a portion of the hydrolyzing acid, with a urea solution, heating the whole mixture such as to bind said urea, because of the catalytic effect of the acid present, on one side on the insoluble fibers of the prehydrolyzed material, and on another side by condensation and formation of glycosylureas with the reducing saccharides.

4. The process of claim 3, wherein

a1) one treats the ligno-cellulosic material, under heating, with a diluted acid solution containing reducing sugars, the latter being the same sugars previously formed by hydrolysis of a previous batch of said material,

a2) one partly drains the prehydrolyzed material but without drying it completely such as to retain, impregnated within the fibers, a part of the hydrolyzing solution,

b) one contacts the wet material with a concentrated aqueous urea solution and one heats the whole so as to link at least 3 mole of urea per kg of said starting ligno-cellulosic material.

5. The process of claim 4, wherein the sugar concentration of the hydrolysis solution is adapted for keeping impregnated within the solid material after draining said material having been subjected to hydrolysis, a quantity of sugars substantially equal to that which has just been liberated during said hydrolysis operation.

6. The process of claim 5, which comprises operating in a semi-continuous fashion, the hydrolyzing liquid being replenished with acid solution after draining from the batch of hydrolyzed material, and being again contacted with a fresh batch of material to be hydrolyzed.

7. The process of claim 4, which comprises heating 2-4 hrs to 90-130° C to effect the prehydrolysis and heating 2-5 hrs to 70-100° C to effect the condensation with urea.

8. The process of claim 3, which comprises effecting the hydrolysis by injecting water-steam loaded with acid into the ligno-cellulosic material, the quantity of said steam being calculated for having little or no liquid to form by condensation and for causing the soluble reducing saccharides thus formed to stay absorbed in the fibers of the prehydrolyzed material.

9. The process of claim 3, which comprises effecting the prehydrolysis by impregnating the ligno-cellulosic starting material with diluted acid; heating the impregnated matter by directly injecting steam therein, then adding the urea to the condensation

— 21 —

liquid produced during hydrolysis, and heating the combined solids and liquid while distilling off the excess of water, so as to obtain a solid fibrous product, the soluble compounds remaining adsorbed thereto.

10. The process of claim 9, in which the acid is diluted aqueous HCl and in which the step of condensation with urea is carried out under distillation conditions such that the HCl is progressively eliminated by evaporation so as to minimize possible acid overconcentration toward the end of the condensation stage.

11. The process of claim 9, in which after the hydrolysis step is completed, part of the acid having served for hydrolysis and possibly being in excess for effecting the condensation with urea is partially neutralized with a base, either before the condensation with urea is undertaken or at some stage during said condensation step.

12. The process of claim 11, in which the partial neutralization is effected when the residual content of water impregnated in the fiber is about 20-30%.

13. The process of claim 9, wherein subsequent to heating an distilling off he excess of water, the obtained fodder is completely neutralized with alkali in order to improve palatability to cattle.

14. The process of claim 9, which comprises inserting a pelletizing step between the hydrolysis step and the heating step for fixing the urea, such pelletizing step consisting in rotating the prehydrolyzed material still wetted with the acid and having the urea incorporated therein in a rotatable drum until pellets of the prehydrolyzed material impregnated with diluted acid and urea are formed.

15. The fodder of claim 1, wherein the ligno-cellulosic material is selected from cereal straw and chaff, corn husks, rice hulls, sugar cane bagasse, wooden refuses and other vegetable refuses.

16. A fodder product as obtained from any of the manufacturing embodiments disclosed throughout the present specification and claims.

1/1

0007136

European Patent Office

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| D | US - A - 4 089 980 (K.L. BERGER et al.) <br><br> * Column 1, lines 51-56; column 2, lines 14-60; column 3, line 32 - column 4, line 24; examples * <br><br> -- | 1-4,7, 10,11, 15,16 | A 23 K 1/12 <br> A 23 K 1/22 |
| D | US - A - 3 878 304 (W.P. MOORE) <br><br> * Column 2, lines 9-56; column 4, lines 23-42 and 57-67; column 5, line 50 - column 6, line 11 * <br><br> -- | 1-4, 15,16 | TECHNICAL FIELDS SEARCHED (Int.Cl. 3) <br><br> A 23 K 1/12 <br> A 23 K 1/22 |
| | US - A - 4 044 156 (U. DINER et al.) <br><br> * Column 3, line 41 - column 5, line 36 * <br><br> -- | 1-4 | |
| | DE - C - 727 691 (K. BRAND) <br><br> * Page 2, lines 16-33, 59-83 and 103-113; example III * <br><br> -- | 1-4,7, 9,15, 16 | |
| A | FR - A - 2 237 587 (INSTITUT NATIONAL DE LA RECHERCHE AGRO- NOMIQUE) <br><br> ---- | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 05-10-1979 | SCHUERMANS |